# EUROPÄISCHE PATENTSCHRIFT

(11) **EP 1 543 052 B1**
(45) Veröffentlichungstag und Bekanntmachung des Hinweises auf die Patenterteilung: **21.12.2011**
(21) Anmeldenummer: 03757834.1
(22) Anmeldetag: 13.09.2003
(51) Int. Cl.: C08G 18/08, C08K 5/09, C09K 3/10

(54) **Stabile, katalysatorfreie zweikomponentige PU-Systeme**
Stable, catalyst free two component PU systems
Systemes de polyurethanne a deux composants stables et sans catalysateur

(30) Priorität: 23.09.2002 DE 10244142
(43) Veröffentlichungstag der Anmeldung: 22.06.2005
(73) Patentinhaber: Henkel AG & Co. KGaA, 40589 Düsseldorf (DE)
(72) Erfinder: THIELE, Lothar, 40764 Langenfeld (DE); TE POEL, Andre, 47877 Willich (DE)
(86) Internationale Anmeldenummer: PCT/EP2003/010211
(87) Internationale Veröffentlichungsnummer: WO 2004/029121

(56) Entgegenhaltungen:
- EP-A- 0 882 748
- EP-A- 1 197 506
- WO-A-96/17014
- DE-A- 4 444 249
- US-A- 4 341 689

## Beschreibung

Die vorliegende Erfindung betrifft unkatalysierte und katalysierte Polyurethanzusammensetzungen mit stabiler Reaktivität (Topfzeit) sowie deren Verwendung für Klebstoffe, Dichtungsmassen und Gießmassen.

Mehrkomponentige Polyurethanzusammensetzungen werden schon seit langer Zeit als Klebstoffe, Dichtungsmassen oder Gießmassen eingesetzt. Zusammenfassend sind diese Einsatzgebiete für Polyurethanzusammensetzungen z.B. in den Kapiteln 8 bzw. 11 des Kunststoff-Handbuchs, 3. Auflage, Bd. 7, Hanser-Verlag, 1993, beschrieben. Bei zwei= komponentigen Systemen besteht die eine Komponente in der Regel aus flüssigen Polyhydroxyverbindungen, die ggf. Füllstoffe, Katalysatoren und weitere Hilfsstoffe enthält, die zweite Komponente enthält dabei im wesentlichen ein flüssiges Di- oder Polyisocyanat entweder in reiner Form oder als sogenanntes Quasi-Prepolymer oder in Form von Isomerenmischungen. Wegen ihrer guten Haftungseigenschaften auf den unterschiedlichsten Materialien sowie hohen Zug-, Zugscher- sowie Schälfestigkeiten bei sehr hoher Bruchdehnung finden diese Klebstoffe, Dichtstoffe und Gießmassen in einer Vielzahl von industriellen und handwerklichen Applikationen Anwendung. Beispielhaft erwähnt seien hier nur der Automobilbau, der allgemeine Nutzfahrzeugbau, der Schiff- bzw. Bootsbau, der allgemeine Maschinenbau, die Elektroindustrie sowie der Hochbau.

Bei vielen Applikationen verlangen die Arbeitsabläufe lange Topfzeiten, gleichzeitig müssen diese Topfzeiten über den Lagerungszeitraum der Polyurethanzusammensetzungen vor der Applikation konstant bleiben. Polyurethansysteme, insbesondere katalysierte füllstoffhaltige Zusammensetzungen haben in vielen Fällen keine stabilen Topfzeiten und damit auch keine konstanten Härtungsgeschwindigkeiten.

Unter Topfzeit wird der Zeitraum verstanden, der nach der vollständigen Vermischung eines Zwei- oder Mehrkomponentensystems zur sachgerechten Verarbeitung verbleibt, bevor die Viskosität der Mischung durch einsetzende Reaktion so hoch geworden ist, daß die Mischung nicht mehr sachgerecht verarbeitet werden kann.

Innerhalb gewisser Grenzen läßt sich die Topfzeit durch die Art und Menge des eingesetzten Katalysators steuern, bei einer gegebenen Formulierung ohne Katalysator ist es jedoch bisher nicht möglich gewesen, die Reaktion und damit die Topfzeit noch weiter -zu verlängern. In diesen Fällen mußte dann auf reaktionsträgere Isocyanate ausgewichen werden. In der allgemeinen Literatur bzw. in der Patentliteratur wird vielfach vorgeschlagen, die unkatalysierte Reaktion durch Säurezugabe zu verzögern, siehe z.B. J.H. Saunders, K.C. Frisch, Polyurethanes Chemistry and Technology, Bd. 1, Chemistry, S. 213, Interscience Publ., 1962. Es wird z.B. die Zugabe von Salzsäure oder von Säurechloriden vorgeschlagen, bei dieser Vorgehensweise handelt. es sich jedoch nicht um eine echte Verzögerung der Reaktion, sondern um eine Neutralisation aller katalytisch wirkenden alkalischen Verunreinigungen in der Zusammensetzung. Die Zugabe der dort vorgeschlagenen Säuren zu Klebstoffen, Dichtmassen oder Gießharzen kann jedoch zu Korrosionseffekten an den Oberflächen der zu verklebenden bzw. zu vergießenden Substrate führen, so daß diese Vorgehensweise in vielen Fällen nicht anwendbar ist.

DE 3607718 A1 beschreibt mehrkomponentige Kleb- und Dichtstoffe auf Polyurethanbasis mit einstellbarer Topfzeit, gemäß der Lehre dieser Schrift soll das mehrkomponenten System einer reinen Polyolkomponente (I) mit langer Topfzeit und einer Polyolkomoponente (II) mit kurzer Topfzeit und einem handelsüblichen Prepolymeren mit freien Isocyanatgruppen bestehen. Die Polyolkomponente (II) soll dabei einen Anteil an Aminohydroxyverbindungen aufweisen. Die Polyolkomponenten (I) und (II) sollen dabei in Abhängigkeit von der gewünschten Topfzeit im Verhältnis 0,1 bis 99,9:99,9 bis 0,1 Gew.-%, bezogen auf das Gesamtgewicht der Polyolkomponenten, vorliegen und das Molverhältnis der H-reaktiven Gruppen zu freien Isocyanatgruppen soll 1:1 betragen. Dem Endanwender soll nach diesem Vorschlag ein Dreikomponentensystem bestehend aus einer Polyolkomponente mit einer Topfzeit von bis zu 8 Stunden und darüber hinaus bis zu einem Arbeitstag und länger und einer Polyolkomponente (II) mit einer Topfzeit zwischen 1 und 60 Minuten sowie einer Polyisocyanatprepolymer Komponente an die Hand gegeben werden, wobei dieser dann die Topfzeit über das Mischungsverhältnis der Polyolkomponenten einstellen soll. Ein derartiges System ist schwer zu handhaben, außerdem macht diese Schrift keinerlei Angaben über die Konstanz der Topfzeit der Polyurethanzusammensetzungen während der Lagerzeit der Einzelkomponenten.

DE 4442353 A schlägt die Zugabe von pyrogenen Kieselsäuren zu PolyurethanZusammensetzungen vor, bei denen zumindest ein Teil der Füllstoffe, vorzugsweise mindestens 30 Ges.-% der Füllstoffe, gecoatet sind. Diese Zusammensetzungen können ein-oder mehrkomponentig sein und können dabei sowohl katalysatorhaltig als auch katalysatorfrei sein. Wesentlich für die Stabilität der Topfzeit über die Lagerzeit der nicht aus reagierenden Polyurethanzusammensetzungen ist dabei das mindestens 20, vorzugsweise mindestens 30 Gew.-% des Füllstoffes mit einem Hydrophobierungsmittel beschichtet ist (gecoatet).

Die DIE 44 44 249 A1 beschreibt 2K-PU-Zusammensetzungen, die aus Polyolen und Isocyanat-haltigen Prepolymeren aufgebaut sind. Dabei werden als Katalysatoren tertiäre Amine eingesetzt, zusammen mit bestimmten organischen Säuren. Katalysatorfreie Systeme werden nicht erwährt.

Angesichts dieses Standes der Technik haben sich die Erfinder die Aufgabe gestellt, die Reaktivität und damit die Topfzeit von zwei- oder mehrkomponentigen Polyurethanzusammensetzungen so zu stabilisieren, daß über einen langen Lagerungszeitraum der Zusammensetzungen zum Zeitpunkt der Endanwendung stabile Topfzeiten erzielt werden.

Die erfindungsgemäße Aufgabe ist den Patentansprüchen zu entnehmen. Sie besteht im Wesentlichen in der Bereitstellung einer zwei- oder mehrkomponentigen reaktiven Polyurethanzusammensetzung bestehend aus mindestens einer Polyole enthaltenen Komponente und mindestens einer Polyisocyanate enthaltenden Komponente, wobei die Zusammensetzung Säuren mit einem pKs-Wert zwischen 2,8 und 4,5 enthält. Dabei sall die Zusammensetzung frei von Katalysatoren sein.

In einer bevorzugten Ausführungsform handelt es sich um eine zweikomponentige reaktive Polyurethanzusammensetzung bestehend aus einer Polyole enthaltende Komponente A und einer das oder die Isocyanate enthaltende Komponente B, wobei vorzugsweise die Säure oder das Gemisch organischen Säuren mit einem pKs-Wert zwischen 2,8 und 4,5 in der Polyol-Komponente A enthalten ist.

In einer besonders bevorzugten Ausführungsform besteht die Polyole enthaltende Komponente (A) aus
(a) einem oder mehreren Di- oder Polyolen,
(b) hochdisperser Kieselsäure,
(c) Füllstoffen,
(d) Molekularsieb in Form eines Na-Al-Silicates,
(e) ggf. Alterungsschutzmitteln und/oder weiteren Hilfs- und Zusatzstoffen sowie
(f) mindestens einer Säure mit einem pKs-Wert zwischen 2,8 und 4,5.

Als Di- und/oder Polyole für das Bindemittel eignen sich vorzugsweise die flüssigen Polyhydroxyverbindungen mit zwei bzw. drei Hydroxylgruppen pro Molekül, wie z.B. di-und/oder trifunktionelle Polypropylenglycole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglycole, die z.B. durch die saure Polymerisation von Tetrahydrofuran hergestellt werden, dabei liegt der Molekulargewichtsbereich der Polytetramethylenglycole zwischen 200 und 6000, vorzugsweise im Bereich von 400 bis 4000.
Weiterhin sind als Polyole die flüssigen Polyester geeignet, die durch Kondensation von Di- bzw. Tricarbonsäuren, wie z.B. Adipinsäure, Sebacinsäure, Glutarsäure mit niedermolekularen Diolen bzw. Triolen wie z.B. Ethylenglycol, Propylenglykol, Diethylenglycol, Triethylenglycol, Dipropylenglycoi, 1,4-Butandiol, 1,6-Hexandiol, Glyzerin oder Trimethylolpropan hergestellt werden können.

Eine weitere Gruppe der erfindungsgemäße einzusetzenden Polyole sind die Polyester auf der Basis von ε -Caprolacton, auch "Polycaprolactone" genannt.

Bevorzugt können auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest -hergestellt werden (siehe z.B. DE-A-3626223). Weitere geeignete Polyole sind Polycarbonatpolyole und Dimerdiole (Fa.Cognis) sowie hydroxyfunktionelle Öle, insbesondere Rizinusöl und dessen Derivate.
Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Unter "hochdisperser Kieselsäure" wird eine feinteilige im wesentlichen amorphe pyrogene Kieselsäure mit über 99,8 Gew.% SiO₂ Gehalt verstanden, wie sie z.B. durch Hydrolyse von Siliciumtetrachlorid in einer Knallgasflamme hergestellt wird. Diese Kieselsäuren sind z.B. unter dem Warenzeichen "Aerosil" im Handel erhältlich.

Die Zugabe von hochdispersen Kieselsäuren zu Klebstoffen, Dichtstoffen oder Gießharzen ist in der Praxis seit langem bekannt und üblich.

Als hochdisperse Kiesetsäuren werden dabei vorzugsweise die nicht nachbehandelten, sogenannten "hydrophilen" Kieselsäuren verwendet, die im Handel mit verschiedenen spezifischen Oberflächen (BET-Oberflächen) erhältlich sind. Beispielhaft erwähnt seien die folgenden Handelsprodukte: Aerosil 380, Aerosil 300, Aerosil 200, Aerosil 150, Aerosil 130.

Neben den hydrophilen Kieselsäuren können auch die nachbehandelten, sogenannten "hydrophoben" Kieselsäuren für die erfindungsgemäßen Zusammensetzungen verwendet werden. Dabei können alle an sich bekannten nachbehandelten, hydrophoben Kieselsäuren eingesetzt werden, beispielhaft erwährt seien die mit Dimethylchlorsilan, Dimethylsilazan, langkettigen Chlorsilanen wie z.B. Octyltrichlorsilan oder auch Polydimethylsiloxanen nachbehandelten Kieselsäuren. Diese Kieselsäuren sind beispielsweise unter dem Handelsnamen Aerosil R 202, R 805, R 812, R 972, R 974 oder CABOSIL N 70-TS im Handel erhältlich.

Als Füllstoffe können alle in der Polyurethanchemie gängigen und an sich bekannten Füllstoffe verwendet werden. Im Gegensatz zur Lehre der DE 4442353 A ist bei den erfindungsgemäßen Zusammensetzungen völlig gleichgültig, ob als Füllstoffe ungecoatete oder gecoatete Füllstoffe oder Mischungen dieser zwei Füllstofftypen in beliebigem Mischungsverhältnis verwendet werden. Beispiele für geeignete Füllstoffe sind Kalksteinmehl, natürliche, gemahlene Kreiden (Calciumcarbonate oder Calcium-Magnesiumcarbonate), Schwerspat, Talk, Glimmer, Tone oder ggf. auch Ruß. Die Oberflächenvorbehandlung von Füllstoffen ist an sich bekannt, in der Literatur empfohlen wird die Verwendung von gecoateten Füllstoffen, um deren Dispergierung in der Polymermatrix zu erleichtern, so daß erfindungsgemäß ggf. ein Teil der Füllstoffe gecoated sein kann, es aber nicht sein muss.

Als Coatungsmaterial (Oberflächenvorbehandlungsmaterial) eignen sich dabei eine Vielzahl von Verbindungen, beispielhaft erwähnt sei die Oberflächenvorbehandlung mit langkettigen gesättigten oder ungesättigten Fettsäuren, insbesondere der Stearinsäure bzw. deren Alkali- bzw. Erdalkalisalzen, carboxylierten Polybutadienen, carboxylierten Poly-α-olefinen, Harzsäuren (Abietinsäure bzw. deren Derivate) und/oder deren Metallsalze und/oder deren Ester.

Als Di- oder Polyisocyanate für die Komponente B werden vorzugsweise die aromatischen Isocyanate verwendet, z.B. Diphenylmethandüsocyanat, entweder in Form der reinen Isomeren, als Isomerengemisch der 2,4'-/4,4'-Isomeren oder auch das mit Carbodiimid verflüssigte Diphenylmethandüsocyanat (MDI), das z.B. unter dem Handelsnamen Isonate 143 L bekannt ist. Außerdem kann das sogenannte "Roh-MDI", d.h., die isomeren/ Oligomerenmischung des MDI eingesetzt werden, wie sie z.B. unter dem Handelsnamen PAPI bzw. Desmodur VK im Handel erhältlich sind, Weiterhin können sogenannte "Quasi-Prepolymere", d.h. Umsetzungsprodukte des MDI bzw. des Tolytendiisocyanats (TDI) mit niedermolekularen Diolen wie z.B. Ethylenglycol, Diethylenglycol, Propylenglycol, Dipropylenglycol oder Triethylenglycol verwendet werden. Obwohl- die vorgenannten Isocyanate die besonders bevorzugen Isocyanate sind, können auch in Sonderfälle aliphatische bzw. cycloaliphatische Di- oder Polyisocyanate eingesetzt werden wie z.B. das hydrierte MDI (H₁₂MDI), Tetramethylxylylendiisocyanat (TMXDI), 1-Isocyanatomethyl-3-isocyanato-1,5,5-trimethylcyclohexan (IPDI), Hexan-1,6-diisocyanat (HDI), Biuretisierungsprodukt des HDI, Isocyanuradsierungsprodukt des HDI oder Dimerfettsäure-diisocyanat.

Die erfindungsgemäße Ausführungsform der erfindungsgemäßen Zusammensotzungen ist katalysatorfrei. Als Katalysatoren sind die üblichen in der Polyqrethan-Chemie bekannten metallorgaüischen Verbindungen bekannt, sowie tertiären Amine oder Amidine .

Weiterhin kann der erfindungsgemäße Klebstoff ggf. zusätzlich Stabilisatoren enthalten. Als "Stabilisatoren" im Sinne dieser Erfindung sind Antioxidanzien, UV-Stabllisatoren oder Hydrolyse-Stabilisatoron zu verstehen. Die Auswahl dieser Stabilisatoren richtet sich zum einen nach den Hautpkomponenten der Zusammensetzung und zum anderen nach den Applikatiönsbedingungen sowie den zu erwartenden Belastungen der Verklebung, Dichtungsfuge oder Einkapselung. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazofe und/oder Amine vom "HALS"-Typ (Hindered Amine Light Stabillzer).

Bestehen wesentliche Bestandteile des Polyurethanprepolymers aus Polyesterbausteinen, werden vorzugsweise Hydrolyse-Stabilisatoren, z.B. vom Carbodiimid-Typ, eingesetzt.

Die erfindungsgemäßen Zusammensetzungen können außerdem noch weitere an sich bekannte Hiffs- und Zusatzmittel enthalten, wie z.B. Weichmacher (beisplelswelse Phthalsäureester) oder zusätzliche Thixotropiermittel (z.B. betone, Hamstoffderivate, fibrilierte oder Pulp-Kurzfasern), Verlaufsmittel, Entschäumer oder Farbpasten bzw. Pigmente.

Ein besonderer Vorteil der erfindungsgomäßon Vorgehensweise ist es, daß die stabilisierend wirkenden Säuren gleichzeitig als Katalysator genutzt werden können. Der stabilisierende Effekt der organischen Säuren wird allerdings nur beobachtet, wenn die organischen Säuren einen pKs-Bereich zwischen 2,8 und 4,5 aufweisen.

Beispiele für erfindungsgemäß zu verwendete Säuren sind Phtalsäure, isophthalsäure, Terephtalsäure, Ascorbinsäure, Benzoesäure, o-Hydroxybenzoesäure, p-Hydroxybenzoesäure, Salicylsäure, Adipinsäure, Bersteinsäure, Äpfelsäure, Ameisensäure, Acetylsalicylsäure, Alanin, β-Alanin, 4-Aminobuttersäure, 2,3-Dihydroxybenzoesäure, 2,4-Dihydroxybenzoesäure, 3,4-Dihydroxybenzoesäure, Glycin, Milchsäure, Sarkosin, Serin, Kationentauscher mit Carboxymethylgruppen, Kationentauscher mit Orthophosphatgruppen. Es können dabei die vorgenannten Säuren wohl einzeln als auch Mischungen mehrerer Säuren verwendet werden.

Bevorzugt werden die Polyole und die Polyisocyanate als Zweikomponentensystem eingesetzt, wobei die sog. Harzkomponente die Polyole sowie die Füllstoffe, die hochdisperse Kieselsäure sowie ggf. Trocknungsmittel enthält. Als Trocknungsmittel können hierbei alle gängigen Wasserfänger eingesetzt werden, wie z.B. monofunktionelle Isocyanate, Orthoameisensäureester, ganz besonders bevorzugt sind die Natrium-Aluminiumsilikate in Form der Molekularsiebe.

Die sog. Härterkomponente enthält in der Regel nur das Di- bzw. Polyisocyanat bzw. das "Quasiprepolymer", jedoch kann auch diese Komponente gegebenenfalls geringe Mengen an Füllstoffen, Thixotropiermitteln oder Pigmenten enthalten.

Wie bereits eingangs erwähnt, können die erfindungsgemäßen PolyurethanZusammensetzungen als Klebstoffe, Dichtstoffe und/oder Gießmassen in einer Vielzahl von Applikationen Anwendung finden, insbesondere eignen sie sich für die Montage-Verklebung und strukturelle Verklebung, z.B. bei der Herstellung von Sandwich-Bauteilen.

Nachfolgend wird die Erfindung anhand einiger besonders bevorzugter Ausführungsbeispiele näher erläutert. Die Mengenangaben in den Beispielen sind Gewichtsteile (Masseanteile), wenn nicht anders angegeben.

### Beispiel 1 (Vergleich)

| **Polyolkomponente** | **Masseanteile in %** |
|---|---|
| Rizinusöl | 57,000 |
| trifunktionelles Polypropylenglykol, MW 450 | 3,900 |
| Na-Al-Silicatpaste | 4,500 |
| pyrogene Kieselsäure | 0,350 |
| Kalksteinmehl gecoatet | 12,045 |
| Dibuthylzinndilaurat | 0,005 |

### Isocyanatkomponente

| | |
|---|---|
| Diphenylmethan-4,4'-disocyanat (Roh-MDI) | 100,0% |
| Mischungsverhältnis Polyol-: Härterkomponente: | 100 : 27,5 |

| | | | | | |
|---|---|---|---|---|---|
| Lagerzeit in d | 0 | 1 | 7 | 20 | 50 |
| Topfzeit in min | 45,0 | 43,0 | 40,5 | 38,0 | 35,0 |

Aus diesem Vergleichsbeispiel wird deutlich, daß mit zunehmender Lagerzeit der zweikomponentigen Polyurethanzusammensetzung die Topfzeit stetig abnimmt.

### Beispiel 2 (erfindungsgemäß)

In der Polyolkomponente des Beispiels 1 wurde das Dibutylzinndilaurat durch 0,5 Gew.% Phthalsäure ersetzt.

Es wurde die gleiche Isocyanatkomponente des Beispiels 1 im gleichen Mischungsverhältnis von Polyol zu Härtekomponenten (Isocyanat-Komponente) verwendet. Dabei wurden die nachfolgenden Topfzeiten ermittelt.

| | | | | | |
|---|---|---|---|---|---|
| Lagerzeit in d | 0 | 1 | 7 | 20 | 50 |
| Topfzeit in min | 48,5 | 47,5 | 48,0 | 47,0 | 47,5 |

### Beispiel 3 (Vergleich)

| **Polyolkomponente** | **Masseanteile in %** |
|---|---|
| Rizinusöl | 33,5 |
| Difunktionelles Polypropylenglykol, MW 1000 | 10,0 |
| Na-Al-Silkatpaste | 4,5 |
| Pyrogene Kieselsäure | 0,3 |
| Kalksteinmehl ungecoatet | 51,7 |

### Isocyanatkomponente

| | |
|---|---|
| Diphenylmethan-4,4'-diisocyanat | 100% |
| Mischungsverhältnis Polyol- : Härterkomponente : | 100 : 18 |

| | | | | | |
|---|---|---|---|---|---|
| Lagerzeit in d | 0 | 1 | 7 | 20 | 50 |
| Topfzeit in min | 85 | 88 | 94 | 99 | 110 |

In diesem Beispiel wurde ein unbeschichteter Füllstoff verwendet, in diesem Fall nimmt die Topfzeit über die Lagerung der Zusammensetzung deutlich zu, dies ist ebenso unerwünscht wie eine Abnahme der Topfzeit über die Lagerzeit im Vergleichsbeispiel 1.

### Beispiel 4 (erfindungsgemäß)

Zur Polyolkomponente des Beispiels 3 wurden 0,4 Gew.% Salicylsäure gegeben, und es wurde die gleiche Isocyantkomponente und das gleiche Mischungsverhältnis wie im Vergleichsbeispiel 3 angewandt und dabei die folgenden Topfzeiten ermittelt.

| | | | | | |
|---|---|---|---|---|---|
| Lagerzeit in d | 0 | 1 | 7 | 20 | 50 |
| Topfzeit in min | 55,0 | 53,5 | 53,0 | 53,5 | 53,5 |

Dieses Beispiel zeigt, daß bei erfindungsgemäßer Zugabe einer organischen Säure auch ungecoatete Füllstoffe verwendet werden können, trotzdem wird eine stabile Topfzeit über die Lagerzeit der Polyurethanzusammensetzungen erhalten.

## Patentansprüche

1. Zwei- oder mehrkomponentige reaktive Polyurethanzusammensetzung bestehend aus
(A) mindestens einer Polyole enthaltenden Komponente und
(B) mindestens einer Polyisocyanate enthaltenden Komponente,
wobei die Zusammensetzung frei von Katalysatoren ist,
**dadurch gekennzeichnet, dass** die Zusammensetzung Säuren mit einem pKs-Wert zwischen 2,8 und 4,5 enthält.

2. Zweikomponentige reaktive Polyurethanzusammensetzung nach Anspruch 1 **dadurch gekennzeichnet, daß** die Polyole enthaltende Komponente (A)
(a) aus einem oder mehreren Di- oder Polyolen,
(b) hochdisperser Kieselsäure,
(c) Füllstoffen,
(d) Molekularsieb in Form eines Na-Al-Silikates,
(e) ggf. Alterungsschutzmitteln und/oder weiteren Hilfs- und Zusatzstoffen,
(f) Säuren
besteht.

3. Zusammensetzung nach Anspruch 1 oder 2 **gekennzeichnet durch** einen Gehalt an Säuren mit einem pKs-Wert von 2,8 bis 4,5 zwischen 0,05 und 3, vorzugsweise zwischen 0,1 und 1,5 Gew.% bezogen auf die Polyole enthaltende Komponente (A).

4. Zusammensetzung nach mindestens einem der vorhergehenden Ansprüche, **dadurch gekennzeichnet, dass** als Polyol eine Mischung aus hydroxyfunktionellen Ölen mit einer OH-Funktionalität von mindestens 2 und di- und/oder höher funktionellen Polypropylenoxiden, Polyethylenoxiden oder deren Copolymeren verwendet wird.

5. Zusammensetzung nach mindestens einem der vorhergehenden Ansprüche **dadurch gekennzeichnet, dass** die Komponente (B) im Wesentlichem aus Diphenylmethandiisocyanat, entweder rein oder als Oligomeren-1 Isamerenmischung, Toluylendüsocyanat, deren Mischungen und/oder deren Umsetzungsprodukten mit niedermolekularen Diolen besteht.

6. Verwendung der Polyurethanzusammensetzung nach mindestens einem der vorhergehenden Ansprüche als Klebstoff, Dichtungsmasse, Gießmasse oder Beschichtungsmittel.

## Claims

1. A reactive two-component or multiple component polyurethane consisting of:
(A) at least one component containing polyols and
(B) at least one component containing polyisocyanate5,
wherein the composition is free of catalysts,
**characterized in that** the composition contains acids with an acid pKₐ value between 2.8 and 4.5.

2. The reactive two-component composition according to claim 1, **characterized in that** the component (A) containing polyols consists of
(a) one or more diols or polyols,
(b) highly dispersed silicic acid,
(c) fillers,
(d) a molecular sieve in the form of an Na-Al silicate,
(e) optionally, anti-ageing agents and/or further adjuvants and additives,
(f) acids.

3. The composition according to claim 1 or 2, **characterized by** a content of acids with an acid pKₐ value from 2.8 to 4.5, of between 0.05 and 3, preferably between 0.1 and 1.5% by weight are based on the component (A) containing polyols.

4. The composition according to at least one of the preceding claims, **characterized in that** a mixture of hydroxy-functional oils with an OH-functionality of at least 2, and of polypropylene oxides, polyethylene oxides with a functionality of 2 or more, or copolymers thereof, is used as a polyol.

5. The composition according to at least one of the preceding claims, **characterized in that** the component (B) essentially consists of diphenylmethane diisocyanate, either pure or as an oligomer/isomer mixture, toluylene diisocyanate, mixtures thereof and/or their reaction products with low molecular diols.

6. The use of the polyurethane composition according to at least one of the preceding claims as an adhesive, sealant, casting compound or coating agent.

## Revendications

1. Composition réactive de polyuréthane à deux composants ou plus, constituée par:
(A) au moins un composant contenant des polyols ; et
(B) au moins un composant contenant un ou plusieurs polyisocyanates ;
la composition étant exempte de catalyseur,
**caractérisée en ce que** la composition contient des acides possédant une valeur de pKs entre 2,8 et 4,5.

2. Composition réactive de polyuréthane à deux composants selon la revendication 1, **caractérisée en ce que** le composant (A) contenant un ou plusieurs polyols est constitué par :
(a) un ou plusieurs diols ou polyols ;
(b) de l'acide silicique fortement dispersé ;
(c) des substances de remplissage ;
(d) un tamis moléculaire sous la forme d'un silicate de sodium-aluminium ;
(e) de manière facultative, des agents de protection contre le vieillissement et/ou d'autres adjuvants et additifs ;
(f) des acides.

3. Composition selon la revendication 1 ou 2, **caractérisée par** une teneur en acides possédant une valeur de pKs de 2,8 à 4,5, entre 0,05 et 3, de préférence entre 0,1 et 1,5 % en poids, rapportés au composant (A) contenant des polyols.

4. Composition selon au moins une des revendications précédentes, **caractérisée en ce qu'**on utilise, à titre de polyol, un mélange d'huiles hydroxyfonctionnelles possédant une fonctionnalité OH d'au moins 2 et d'oxydes de polypropylène, d'oxydes de polyéthylène ou de leurs copolymères, difonctionnels et/ou possédant une fonctionnalité supérieure,

5. Composition selon au moins une des revendications précédentes, **caractérisée en ce que** le composant (8) est constitué essentiellement par du diphénylméthanedüsocyanate, que ce soit à l'état pur ou sous la forme d'un mélange d'oligomères/isomères, du toluylènediiocyanate, leurs mélanges et/ou leurs produits réactionnels avec des diols à bas poids moléculaire.

6. Utilisation de la composition de polyuréthane selon au moins une des revendications précédentes à titre d'adhésif, de matière d'étanchéité, de matière à mouler ou d'agent d'enduction.
